# EUROPEAN PATENT APPLICATION

(11) **EP 4 803 577 A1**
(43) Date of publication of application: **09.09.2026**
(21) Application number: 25161773.4
(22) Date of filing: 05.03.2025
(51) Int. Cl.: C08L 69/00

(54) **DIFFUSED POLYCARBONATE-BASED RESIN COMPOSITIONS HAVING IMPROVED CHEMICAL RESISTANCE**

(71) Applicant: SHPP Global Technologies B.V., 4612 PX Bergen op Zoom (NL)
(72) Inventor: Houben, Menno, 4612 PX Bergen op Zoom (NL); Van Heerbeek, Hendrikus Petrus Cornelis, 4612 PX Bergen op Zoom (NL); Lugger, Jody Ann Martin, 4612 PX Bergen op Zoom (NL); Ter Horst, Sascha Jan, 4612 PX Bergen op Zoom (NL)
(74) Representative: Modiano, Gabriella Diana

(57) **Abstract**

A thermoplastic composition includes: (a) from about 40 wt% to about 85 wt% of a polycarbonate homopolymer; (b) from greater than 12 wt% to about 30 wt% of a first polycarbonate-siloxane copolymer (PC-Si copolymer) having a siloxane content of from about 35 wt% to about 45 wt%; (c) from about 1 wt% to about 40 wt% of a second PC-Si copolymer having a siloxane content of from about 4 wt% to about 8 wt%; and (d) from about 0.01 wt% to about 2 wt% of at least one type of diffuser beads. The combined weight percent value of all components does not exceed 100 wt%, and all weight percent values are based on the total weight of the composition. The composition has good chemical resistance properties as evaluated after Environmental Stress Cracking Resistance (ESCR) testing according to ISO 22088-3.

## Description

### FIELD OF THE DISCLOSURE

The present disclosure relates to polycarbonate compositions, and in particular to polycarbonate compositions having good chemical resistance properties that include at least two different polycarbonate-siloxane copolymers.

### BACKGROUND OF THE DISCLOSURE

Functional lighting, medical equipment and automotive industries often rely on diffuser technology to create products that have excellent optical properties and light uniformity over the product surface. Polycarbonate (PC) is a polymer that has good inherent chemical resistance, but the addition of diffuser beads to polycarbonate resin often causes a significant reduction of the chemical resistance of the resulting compositions, leading to failure of articles containing them.

Environmental stress cracking (ESC), which is a common failure type in amorphous thermoplastics, describes the premature failure of a polymer material that is subjected to a mechanical load while being exposed to a chemical medium. Therefore, environmental stress cracking resistance (ESCR) is required in many applications where the plastics are in contact with different chemicals. Current applications often use diffused poly methyl methyl methacrylate (PMMA) or diffused PC thermoplastics due to their suitability and relative low cost, but these diffused compositions can suffer from premature cracking when exposed to chemical media like sunscreen (e.g., in the automotive industry), AF-3 disinfectant wipes (e.g., in the healthcare industry), and oils (e.g., in industrial applications).

As the mechanical properties of polymers are strongly dependent on the average molecular weight and the molecular weight distribution, higher molecular weight PC can be used to address the problem of diffused PC products cracking when exposed to chemical media. Higher molecular weight resins demonstrate higher resistance against chemical media and significantly slower crack propagation, but such resins have decreased processability (especially reduced flow), which can pose a significant problem in products where a high flow is required. Moreover, polymer additives (e.g., impact modifiers, glass fibers) used to enhance mechanical properties can improve the chemical resistance of the PC resin, but these additives often result in reduced optical properties of articles including them.

Accordingly, there is a need for diffused PC products with high chemical resistance but that also have high flow.

These and other shortcomings are addressed by aspects of the present disclosure.

### SUMMARY

Aspects of the disclosure relate to thermoplastic compositions including: (a) from about 40 wt% to about 85 wt% of a polycarbonate homopolymer; (b) from greater than 12 wt% to about 30 wt% of a first polycarbonate-siloxane copolymer (PC-Si copolymer) having a siloxane content of from about 35 wt% to about 45 wt%; (c) from about 1 wt% to about 40 wt% of a second PC-Si copolymer having a siloxane content of from about 4 wt% to about 8 wt%; and (d) from about 0.01 wt% to about 2 wt% of at least one type of diffuser beads. The combined weight percent value of all components does not exceed 100 wt%, and all weight percent values are based on the total weight of the composition. The composition has good chemical resistance properties as evaluated after Environmental Stress Cracking Resistance (ESCR) testing according to ISO 22088-3.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

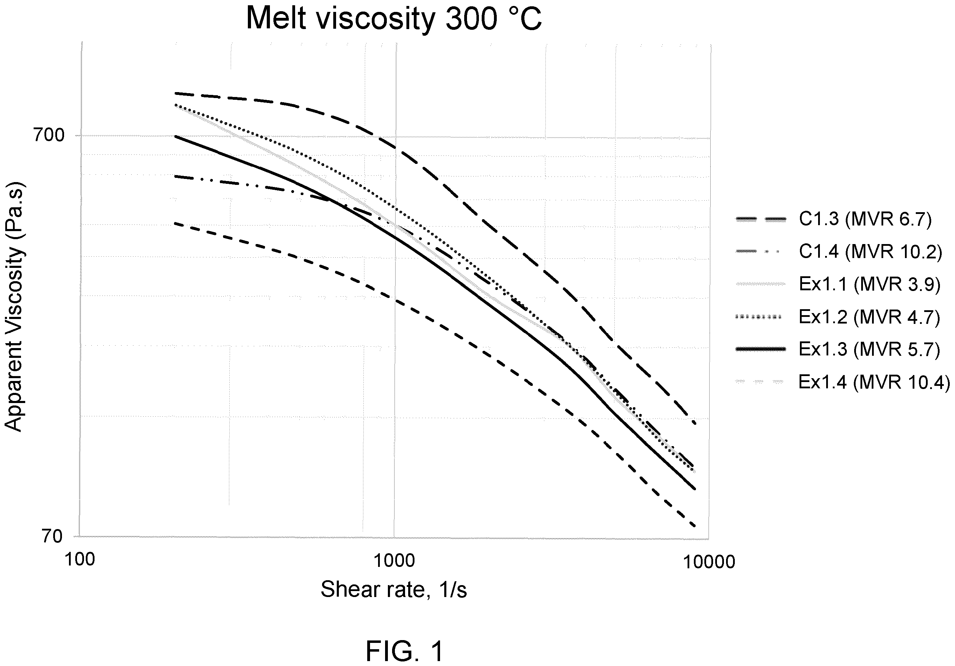

FIG. 1 is a graph showing melt viscosity as a function of shear rate for example and comparative compositions according to aspects of the disclosure.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to a composition including "a polycarbonate" includes compositions having two or more polycarbonate resins.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "Mₙ" can be used interchangeably, and refer to the statistical average molecular weight of all the polymer chains in the sample and is defined by the formula: ${M}_{n} = \frac{\sum {N}_{i} {M}_{i}}{\sum {N}_{i}} ,$ where Mᵢ is the molecular weight of a chain and Nᵢ is the number of chains of that molecular weight. Mₙ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "M_{w}" can be used interchangeably, and are defined by the formula: ${M}_{w} = \frac{\sum {N}_{i} {{M}_{i}}^{2}}{\sum {N}_{i} {M}_{i}} ,$ where Mᵢ is the molecular weight of a chain and Nᵢ is the number of chains of that molecular weight. Compared to Mₙ, M_{w} takes into account the molecular weight of a given chain in determining contributions to the molecular weight average. Thus, the greater the molecular weight of a given chain, the more the chain contributes to the M_{w}. M_{w} can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula: $PDI = \frac{{M}_{w}}{{M}_{n}} .$ The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula: 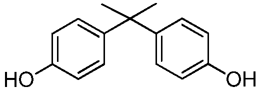 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: (a) from about 40 wt% to about 85 wt% of a polycarbonate homopolymer; (b) from greater than 12 wt% to about 30 wt% of a first polycarbonate-siloxane copolymer (first PC-Si copolymer) having a siloxane content of from about 35 wt% to about 45 wt%; (c) from about 1 wt% to about 40 wt% of a second PC-Si copolymer having a siloxane content of from about 4 wt% to about 8 wt%; and (d) from about 0.01 wt% to about 2 wt% of at least one type of diffuser beads. The combined weight percent value of all components does not exceed 100 wt%, and all weight percent values are based on the total weight of the composition.

Generally, as used herein, the term or suffix "polycarbonate" means compositions having repeating structural carbonate units of the formula (1): 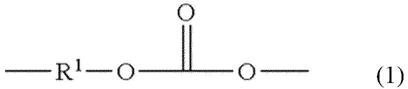 in which at least 60 percent of the total number of R¹ groups are aromatic organic radicals and the balance thereof are aliphatic, alicyclic, or aromatic radicals. In one aspect, each R¹ is an aromatic organic radical, for example a radical of the formula (2):

A¹-Y¹-A²- (2)

wherein each of A¹ and A² is a monocyclic divalent aryl radical and Y¹ is a bridging radical having one or two atoms that separate A¹ from A². In an exemplary aspect, one atom separates A¹ from A². Illustrative non-limiting examples of radicals of this type are -O-, -S-, -S(O)-, -S(O)₂-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ may be a hydrocarbon group or a saturated hydrocarbon group such as methylene, cyclohexylidene, or isopropylidene.

Polycarbonates may be produced by the reaction of dihydroxy compounds having the formula HO-R¹-OH, which includes dihydroxy compounds of formula (3):

HO-A¹-Y¹-A²-OH (3)

wherein Y¹, A¹ and A² are as described above. Also included are bisphenol compounds of general formula (4): 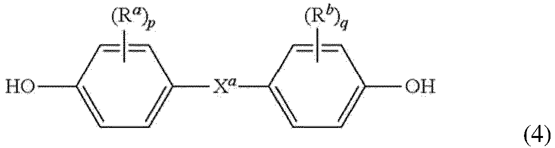
wherein R^{a} and R^{b} each represent a halogen atom or a monovalent hydrocarbon group and may be the same or different; p and q are each independently integers of 0 to 4; and X^{a} represents one of the groups of formula (5): 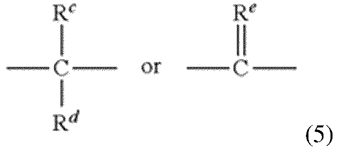
wherein R^{c} and R^{d} each independently represent a hydrogen atom or a monovalent linear or cyclic hydrocarbon group and R^{c} is a divalent hydrocarbon group.

In an aspect, a heteroatom-containing cyclic alkylidene group includes at least one heteroatom with a valency of 2 or greater, and at least two carbon atoms. Heteroatoms for use in the heteroatom-containing cyclic alkylidene group include -O-, -S-, and - N(Z)-, where Z is a substituent group selected from hydrogen, hydroxy, C₁₋₁₂ alkyl, C₁₋₁₂ alkoxy, or C₁₋₁₂ acyl. Where present, the cyclic alkylidene group or heteroatom-containing cyclic alkylidene group may have 3 to 20 atoms, and may be a single saturated or unsaturated ring, or fused polycyclic ring system wherein the fused rings are saturated, unsaturated, or aromatic.

Other bisphenols containing substituted or unsubstituted cyclohexane units can be used, for example bisphenols of formula (6): 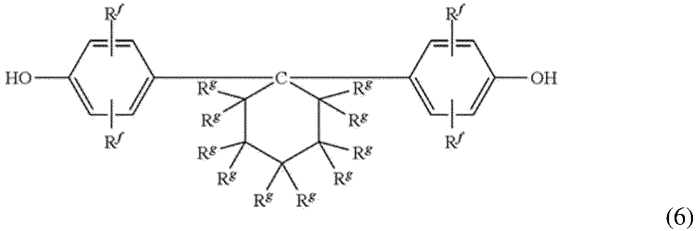 wherein each R^{f} is independently hydrogen, C₁₋₁₂ alkyl, or halogen; and each R^{g} is independently hydrogen or C₁₋₁₂ alkyl. The substituents may be aliphatic or aromatic, straight chain, cyclic, bicyclic, branched, saturated, or unsaturated. Such cyclohexane-containing bisphenols, for example the reaction product of two moles of a phenol with one mole of a hydrogenated isophorone, are useful for making polycarbonate polymers with high glass transition temperatures and high heat distortion temperatures. Cyclohexyl bisphenol containing polycarbonates, or a combination including at least one of the foregoing with other bisphenol polycarbonates, are supplied by Covestro.

Other useful dihydroxy compounds having the formula HO-R¹-OH include aromatic dihydroxy compounds of formula (7): 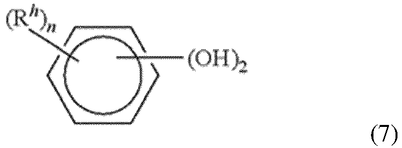 wherein each R^{h} is independently a halogen atom, a C₁₋₁₀ hydrocarbyl such as a C₁₋₁₀ alkyl group, a halogen substituted C₁₋₁₀ hydrocarbyl such as a halogen-substituted C₁₋₁₀ alkyl group, and n is 0 to 4. The halogen is usually bromine.

Exemplary dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, and the like, as well as combinations including at least one of the foregoing dihydroxy compounds.

Specific examples of bisphenol compounds that may be represented by formula (3) include 1,1-bis(4-hydroxyphenyl)methane, 1,1-bis(4-hydroxyphenyl)ethane, 2,2-bis(4-hydroxyphenyl)propane (hereinafter "bisphenol A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl) propane, 1,1-bis(4-hydroxy-t-butylphenyl)propane, 3,3-bis(4-hydroxyphenyl)phthalimidine, 2-phenyl-3,3-bis(4-hydroxyphenyl)phthalimidine (PPPBP), and 1,1-bis(4-hydroxy-3-methylphenyl)cyclohexane (DMBPC). Combinations including at least one of the foregoing dihydroxy compounds may also be used.

In a specific aspect, X^{a} in formula (4) is a substituted, fused C₅₋₁₈ heterocycloalkylidene. In a specific aspect, a dihydroxyaromatic monomer including the substituted, fused C₅₋₁₈ heterocycloalkylidene is a 2-hydrocarbyl-3,3-bis(4-hydroxyaryl)phthalimidine (also referred to as a 2-hydrocarbyl-3,3-bis(4-hydroxyaryl)-2,3-dihydroisoindol-1-one) of the formula (8): 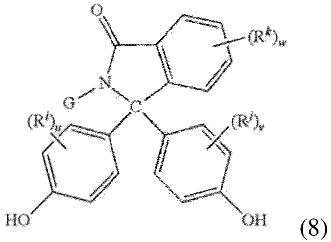 wherein Rⁱ, R^{j}, and R^{k} are independently C₁₋₁₂ hydrocarbyl, G is a C₁₋₁₂ alkyl or C₆₋₁₈ aromatic group, and u, v, and w are each independently an integer from 0 to 4. In an exemplary aspect, the dihydroxyaromatic monomer is 2-phenyl-3,3-bis(4-hydroxyphenyl)phthalimidine (PPPBP), having the formula (8a):

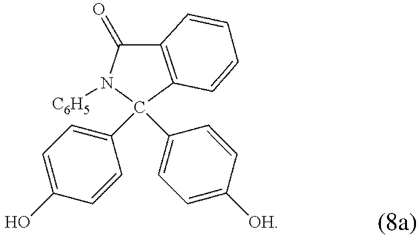

The polycarbonate homopolymer may include a linear polycarbonate homopolymer, a branched polycarbonate homopolymer, or a combination thereof. In some aspects the polycarbonate homopolymer is a low molecular weight (high flow) polycarbonate having a molecular weight of less than 28,000 (e.g., 21,000 to 22,000). In further aspects the polycarbonate homopolymer is a high molecular weight (low flow) polycarbonate having a molecular weight of 28,000 or higher (e.g., 30,000 to 31,000). In certain aspects the polycarbonate component includes a combination of the above polycarbonate homopolymers. For example, the composition may include two or more polycarbonate homopolymers, such as a first polycarbonate homopolymer having a low molecular weight and a second polycarbonate homopolymer having a high molecular weight. In further aspects the composition may include a recycled (e.g., post-consumer recycled, PCR) polycarbonate.

In specific aspects the polycarbonate homopolymer includes a linear polycarbonate, a branched polycarbonate, a post-consumer recycled polycarbonate, a low molecular weight polycarbonate having a molecular weight of less than 28,000, a high molecular weight polycarbonate having a molecular weight of greater than 28,000, or a combination thereof. Molecular weight may be evaluated according to bisphenol A polycarbonate standards.

In further aspects the polycarbonate homopolymer includes a first polycarbonate having a molecular weight of less than 28,000 and a second polycarbonate having a molecular weight of greater than 28,000, wherein molecular weight is evaluated according to bisphenol A polycarbonate standards. In other aspects the first polycarbonate has a molecular weight of from 21,000 to 22,000 and the second polycarbonate has a molecular weight of from 30,000 to 31,000.

Compositions according to aspects of the disclosure include from about 40 wt% to about 85 wt% of the polycarbonate homopolymer. In further aspects the composition includes at least 40 wt%, or at least 42 wt%, or at least 44 wt%, or at least 46 wt%, or at least 48 wt%, or at least 50 wt%, or at least 52 wt%, or at least 54 wt%, or at least 56 wt%, or at least 58 wt%, or at least 60 wt%, or at least 62 wt%, or at least 64 wt%, or at least 66 wt%, or at least 68 wt%, or at least 70 wt%, or at most 85 wt%, or at most 80 wt%, or at most 75 wt%, or at most 70 wt%, or at most 65 wt%, or at most 60 wt%, or at most 55 wt%, or at most 50 wt%, of the polycarbonate homopolymer.

Compositions according to aspects of the disclosure include from greater than 12 wt% to about 30 wt% of a first polycarbonate-siloxane copolymer (first PC-Si copolymer) having a siloxane content of from about 35 wt% to about 45 wt%, and from about 1 wt% to about 40 wt% of a second PC-Si copolymer having a siloxane content of from about 4 wt% to about 8 wt%.

The first polycarbonate-siloxane copolymer has a siloxane content of from about 35 wt% to about 45 wt% based on the total weight of the polycarbonate-siloxane copolymer. In specific aspects the first polycarbonate-siloxane copolymer has a siloxane content of at least 36 wt%, at least 37 wt%, at least 38 wt%, at least 39 wt%, about 40 wt%, at most 45 wt%, at most 44 wt%, at most 43 wt%, at most 42 wt%, or at most 41 wt%.

The composition includes from greater than 12 wt% to about 30 wt% of the first polycarbonate-siloxane copolymer. In some aspects the composition includes greater than 12 wt%, or at least 12.5 wt%, or at least 13 wt%, or at least 13.5 wt%, or at least 14 wt%, or at least 14.5 wt%, or at least 15 wt%, or at least 16 wt%, or at least 17 wt%, or at least 18 wt%, or at least 19 wt%, or at least 20 wt%, or at most 30 wt%, or at most 28 wt%, or at most 26 wt%, or at most 24 wt%, or at most 22 wt%, or at most 20 wt%, or at most 18 wt%, or at most 16 wt%, of the first polycarbonate-siloxane copolymer.

The second polycarbonate-siloxane copolymer has a siloxane content of from about 4 wt% to about 8 wt% based on the total weight of the polycarbonate-siloxane copolymer. In specific aspects the first polycarbonate-siloxane copolymer has a siloxane content of at least 4 wt%, at least 5 wt%, about 6 wt%, at most 8 wt%, or at most 7 wt%. The composition includes from about 1 wt% to about 40 wt% of the second polycarbonate-siloxane copolymer. In further aspects the composition includes at least 1 wt%, or at least 2 wt%, or at least 3 wt%, or at least 4 wt%, or at least 5 wt%, or at least 8 wt%, or at least 10 wt%, or at least 13 wt%, or at least 15 wt%, or at least 18 wt%, or at least 20 wt%, or at least 23 wt%, or at least 25 wt%, or at least 28 wt%, or about 30 wt%, or at most 40 wt%, or at most 38 wt%, or at most 36 wt%, or at most 34 wt%, or at most 32 wt%, or at most 30 wt%, or at most 28 wt%, or at most 26 wt%, or at most 24 wt%, or at most 22 wt%, or at most 20 wt%, or at most 18 wt%, or at most 16 wt%, or at most 14 wt%, or at most 12 wt%, or at most 10 wt%, or at most 8 wt%, or at most 6 wt%, or at most 4 wt%, of the second polycarbonate-siloxane copolymer.

In further aspects the composition includes at least one additional polycarbonate-siloxane copolymer in addition to the first polycarbonate-siloxane copolymer and the second polycarbonate-siloxane copolymer described herein. The at least one additional polycarbonate-siloxane copolymer may have a siloxane content of, e.g., from about 15 wt% to about 25 wt%, or at least 15 wt%, or at least 16 wt%, or at least 17 wt%, or at least 18 wt%, or at least 19 wt%, or about 20 wt%, or at most 25 wt%, or at most 24 wt%, or at most 23 wt%, or at most 22 wt%, or at most 21 wt%.

Exemplary polycarbonate-siloxane copolymers are available from SABIC, including LEXAN^{™} t-EXL resin, available from SABIC, which is a transparent polycarbonate-siloxane copolymer having a siloxane content of about 6 wt%. Another polycarbonate-siloxane copolymer having a siloxane content of about 40 wt% is available from SABIC. As used herein, "siloxane content" of the polycarbonate-siloxane copolymer means the content of siloxane units based on the total weight of the polycarbonate-siloxane copolymer.

Compositions according to aspects of the disclosure include from about 0.01 wt% to about 2 wt% of at least one type of diffuser beads. Suitable diffuser beads include, but are not limited, to poly methyl methacrylate (PMMA) crosslinked diffuser beads, silicone diffuser beads, polystyrene acrylic diffuser beads, and combinations thereof. In specific aspects the composition includes at least two types of diffuser beads including PMMA crosslinked diffuser beads and silicone diffuser beads.

Polystyrene acrylic diffuser beads may be formed from styrene acrylic copolymer resins; the binder may be obtained by copolymerizing acrylic type monomers (or acrylic type resin) and styrene type monomers (or styrene type resin). Alternatively, the polymer may be obtained by graft-polymerizing styrene type monomers on side chains of an acrylic type resin, or graft-polymerizing acrylic type monomers on side chains of a styrene type resin. Typical examples of the acrylic type monomers include, for example, methacrylate type monomers such as methyl methacrylate and ethyl methacrylate, acrylate type monomers such as methyl acrylate and ethyl acrylate, hydroxyethyl methacrylate, and acrylamide. Typical examples of the styrene type monomers include styrene, C-methylstyrene, and vinyltoluene.

In specific aspects the composition includes at least 0.01 wt%, or at least 0.02 wt%, or at least 0.03 wt%, or at least 0.04 wt%, or at least 0.05 wt%, or at least 0.06 wt%, or at least 0.07 wt%, or at least 0.08 wt%, or at least 0.09 wt%, or at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1 wt%, or at most 2 wt%, or at most 1.9 wt%, or at most 1.8 wt%, or at most 1.7 wt%, or at most 1.6 wt%, or at most 1.5 wt%, or at most 1.4 wt%, or at most 1.3 wt%, or at most 1.2 wt%, or at most 1.1 wt%, or at most 1 wt%, or at most 0.9 wt%, of the at least one type of diffuser beads.

Compositions according to aspects of the disclosure may include at least one additional additive. The at least one additional additive may include, but is not limited to, an acid scavenger, an anti-drip agent, an antioxidant, an antistatic agent, a chain extender, a colorant, a release agent, a flow promoter, a lubricant, a plasticizer, a quenching agent, a flame retardant, a UV stabilizer, an impact modifier, a blowing agent, a reinforcing agent, or a combination thereof.

In certain aspects the composition includes from 0.001 wt% to about 5 wt% of the at least one additional additive. In further aspects the composition includes at least 0.001 wt%, or at least 0.005 wt%, or at least 0.01 wt%, or at least 0.02 wt%, or at least 0.03 wt%, or at least 0.04 wt%, or at least 0.05 wt%, or at least 0.06 wt%, or at least 0.07 wt%, or at least 0.08 wt%, or at most 5 wt%, or at most 4 wt%, or at most 3 wt%, or at most 2 wt%, or at most 1 wt%, or at most 0.9 wt%, or at most 0.8 wt%, or at most 0.7 wt%, or at most 0.6 wt%, or at most 0.5 wt%, or at most 0.4 wt%, or at most 0.3 wt%, or at most 0.2 wt%, or at most 0.1 wt%, of the at least one additional additive.

In some aspects, the composition has a melt volume rate (MVR) of at least 3.5 cubic centimeters per 10 minutes (cm³/10 min) as evaluated in accordance with ISO 1133 at 300 °C and with a 1.2 kilogram (kg) force. In further aspects the composition has an MVR of at least 4 cm³/10 min, or at least 4.5 cm³/10 min, or at least 5 cm³/10 min, or at least 5.5 cm³/10 min, or at least 6 cm³/10 min, or at least 6.5 cm³/10 min, or at least 7 cm³/10 min, or at least 7.5 cm³/10 min, or at least 8 cm³/10 min, or at least 8.5 cm³/10 min, or at least 9 cm³/10 min, or at least 9.5 cm³/10 min, or at least 4.5 cm³/10 min, as evaluated in accordance with ISO 1133 at 300 °C and with a 1.2 kg force.

In certain aspects the composition has a chemical resistance rating of "compatible" after Environmental Stress Cracking Resistance (ESCR) testing according to ISO 22088-3, wherein a compatible rating is demonstrated by a yield Stress Retention σ_{y} of at least 90% and a tensile Strain at break retention ε_{b} of from 80-139%.

The chemical resistance rating may be evaluated after exposing a sample of the composition to various chemicals, including but not limited to sunscreen, germicide, and oil. In specific aspects the chemical resistance rating is evaluated after exposing a sample of the composition to (1) sunscreen for 3 or 6 days under a strain of 0.5%, (2) AF-3 germicidal for 7 days under a strain of 1%, or (3) olive oil for 3 days under a strain of 1%.

In further aspects after the chemical exposure the sample of the composition has a tensile stress at yield retention of at least 80% or a tensile strain at break retention of at least 70%, wherein tensile stress at yield and tensile strain at break are evaluated in accordance with ISO 527. In particular aspects the composition has a tensile stress at yield retention of at least 80%, or at least 82%, or at least 84%, or at least 86%, or at least 88%, or at least 90%, or at least 92%, or at least 94%, or at least 96%, or at least 98%, or at least 100%, as evaluated in accordance with ISO 527. In specific aspects the composition has a tensile strain at break retention of at least 70%, or at least 72%, or at least 74%, or at least 76%, or at least 78%, or at least 80%, or at least 82%, or at least 84%, or at least 86%, or at least 88%, or at least 90%, or at least 92%, or at least 94%, or at least 96%, or at least 98%, or at least 100%, as evaluated in accordance with ISO 527.

In some aspects the composition has a lower apparent viscosity at a shear rate of 1000 inverse seconds (1/s) as compared to a comparative composition having the same melt volume rate but that does not include a PC-Si copolymer having a siloxane content of from about 35 wt% to 45 wt%, wherein apparent viscosity is evaluated according to ISO 11443.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In specific aspects the article is a functional lighting, medical equipment, or automotive industries component.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a) from about 40 wt% to about 85 wt% of a polycarbonate homopolymer;
b) from greater than 12 wt% to about 30 wt% of a first polycarbonate-siloxane copolymer (PC-Si copolymer) having a siloxane content of from about 35 wt% to about 45 wt%;
c) from about 1 wt% to about 40 wt% of a second PC-Si copolymer having a siloxane content of from about 4 wt% to about 8 wt%; and
d) from about 0.01 wt% to about 2 wt% of at least one type of diffuser beads,
wherein the combined weight percent value of all components does not exceed 100 wt%, and all weight percent values are based on the total weight of the composition.

Aspect 2. The thermoplastic composition according to Aspect 1, wherein the polycarbonate homopolymer comprises a linear polycarbonate, a branched polycarbonate, a post-consumer recycled polycarbonate, a low molecular weight polycarbonate having a molecular weight of less than 28,000, a high molecular weight polycarbonate having a molecular weight of greater than 28,000, or a combination thereof, and wherein molecular weight is evaluated according to bisphenol A polycarbonate standards.

Aspect 3. The thermoplastic composition according to Aspect 1 or 2, wherein the polycarbonate homopolymer comprises a first polycarbonate having a molecular weight of less than 28,000 and a second polycarbonate having a molecular weight of greater than 28,000, wherein molecular weight is evaluated according to bisphenol A polycarbonate standards.

Aspect 4. The thermoplastic composition according to Aspect 3, wherein the first polycarbonate has a molecular weight of from 21,000 to 22,000 and the second polycarbonate has a molecular weight of from 30,000 to 31,000.

Aspect 5. The thermoplastic composition according to any one of Aspects 1 to 4, wherein the first PC-Si copolymer has a siloxane content of about 40 wt%.

Aspect 6. The thermoplastic composition according to any one of Aspects 1 to 5, wherein the second PC-Si copolymer has a siloxane content of about 6 wt%.

Aspect 7. The thermoplastic composition according to any one of Aspects 1 to 6, wherein the composition comprises from about 15 wt% to about 30 wt% of the first PC-Si copolymer.

Aspect 8. The thermoplastic composition according to any one of Aspects 1 to 7, wherein the at least one type of diffuser beads comprises poly methyl methacrylate (PMMA) crosslinked diffuser beads, silicone diffuser beads, or a combination thereof.

Aspect 9. The thermoplastic composition according to any one of Aspects 1 to 8, wherein the composition comprises at least two types of diffuser beads.

Aspect 10. The thermoplastic composition according to any one of Aspects 1 to 9, wherein the composition comprises at least one additional additive.

Aspect 11. The thermoplastic composition according to Aspect 10, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV stabilizer, an impact modifier, a blowing agent, a reinforcing agent, or a combination thereof.

Aspect 12. The thermoplastic composition according to any one of Aspects 1 to 11, wherein the composition has a melt volume rate (MVR) of at least 3.5 cubic centimeters per 10 minutes (cm³/10 min) as evaluated in accordance with ISO 1133 at 300 °C and with a 1.2 kilogram (kg) force.

Aspect 13. The thermoplastic composition according to any one of Aspects 1 to 12, wherein the composition has a chemical resistance rating of compatible after Environmental Stress Cracking Resistance (ESCR) testing according to ISO 22088-3, wherein a compatible rating is demonstrated by a yield Stress Retention σ_{y} of at least 90% and a tensile Strain at break retention ε_{b} of from 80-139%.

Aspect 14. The thermoplastic composition according to Aspect 13, wherein the chemical resistance rating is evaluated after exposing a sample of the composition to (1) sunscreen for 3 or 6 days under a strain of 0.5%, (2) AF-3 germicidal for 7 days under a strain of 1%, or (3) olive oil for 3 days under a strain of 1%.

Aspect 15. The thermoplastic composition according to Aspect 13 or 14, wherein after the chemical exposure the sample of the composition has a tensile stress at yield retention of at least 80% or a tensile strain at break retention of at least 70%, wherein tensile stress at yield and tensile strain at break are evaluated in accordance with ISO 527.

Aspect 16. The thermoplastic composition according to any one of Aspects 1 to 15, wherein the composition has a lower apparent viscosity at a shear rate of 1000 inverse seconds (1/s) as compared to a comparative composition having the same melt volume rate but that does not comprise a PC-Si copolymer having a siloxane content of from about 35 wt% to 45 wt%, wherein apparent viscosity is evaluated according to ISO 11443.

Aspect 17. An article comprising the thermoplastic composition according to any one of Aspects 1 to 16.

Aspect 18. The article according to Aspect 17, wherein the article is a functional lighting, medical equipment, or automotive industries component.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Thermoplastic compositions described herein included one or more of the components listed in Table 1:

**Table 1 - Components**

| **Component** | **Description** | **Source** |
|---|---|---|
| PC-1 | Linear poly(bisphenol A carbonate), CAS Reg. No, 25971-63-5, M_{w} = 30,000-31,000 g/mol, as determined by GPC using bisphenol A polycarbonate standards, produced via interfacial polymerization and end-capped with phenol | SABIC |
| PC-2 | Linear bisphenol A polycarbonate, CAS Reg. No, 25971-63-5, M_{w} = 21,000-22,000 g/mol, as determined by GPC using bisphenol A polycarbonate standards, produced via interfacial polymerization and end-capped with p-cumylphenol | SABIC |
| PC-Si-1 | Polycarbonate-siloxane copolymer, 6 wt% siloxane average siloxane block length of 45 units, having a Mw of 23,500 g/mol as determined by GPC using bisphenol A polycarbonate standards, endcapped with p-cumylphenol | SABIC |
| PC-Si-2 | Polycarbonate-siloxane copolymer, 40 wt% siloxane, average siloxane block length of 45 units, having a Mw of 37,000 to 38,000 g/mol as determined by GPC using bisphenol A polycarbonate standards, produced by interfacial polymerization and endcapped with p-cumylphenol | SABIC |
| TBPP | Tris(2,4-di-tert-butylphenyl) phosphite, CAS Reg. No. 31570-04-4; stabilizer, obtained as IRGAFOS^{™} 168 | BASF |
| DB-1 | Crosslinked Poly(methyl methacrylate-co-ethylene glycol dimethacrylate) diffuser beads with average particle size of 5 µm, MBX 5 | Sekisui Plastics |
| DB-2 | Poly(methylsesquioxane) diffuser beads, with average particle size of 2 µm, Tospearl 120 | Momentive |

Compositions described herein were formed from conventional extrusion and/or molding conditions. Example and comparative compositions are shown in Table 2:

**Table 2 - Example and Comparative Compositions**

| **Component** | **C1.1** | **C1.2** | **C1.3** | **C1.4** | **Ex1.1** | **Ex1.2** | **Ex1.3** | **Ex1.4** |
|---|---|---|---|---|---|---|---|---|
| PC-1 | 99.92 | 54.92 | 99.12 | 54.12 | 54.12 | 44.12 | 34.12 | |
| PC-2 | | 45 | | 45 | | 10 | 20 | 54.12 |
| PC-Si-1 | | | | | 30 | 30 | 30 | 30 |
| PC-Si-2 | | | | | 15 | 15 | 15 | 15 |
| TBPP | 0.08 | 0.08 | 0.08 | 0.08 | 0.08 | 0.08 | 0.08 | 0.08 |
| DB-1 | | | 0.7 | 0.7 | 0.7 | 0.7 | 0.7 | 0.7 |
| DB-2 | | | 0.1 | 0.1 | 0.1 | 0.1 | 0.1 | 0.1 |
| **Total (wt%)** | 100 | 100 | 100 | 100 | 100 | 100 | 100 | 100 |
| | | | | | | | | |
| MVR at 300 °C, 1.2 kg (cm³/10 min) | 6.5 | 12.4 | 6.7 | 10.2 | 3.9 | 4.7 | 5.4 | 10.4 |

The melt volume flow rate (MVR) for each of the compositions was evaluated at 300 °C and a 1.2 kilogram (kg) weight in accordance with ISO 1133; results are shown in cubic centimeters per 10 minutes (cm³/10 min).

Compositions C1.1-C1.4 include conventional PC homopolymer, with C1.1 and C1.2 formed without a diffuser package and C1.3 and C1.4 including two types of diffuser beads. Compositions C1.1 and C1.3 included one type of PC homopolymer-a higher Mw/low flow PC while compositions C1.2 and C1.4 added a second lower Mw/high flow PC. As a result, the MVR of C1.1 and C1.3 was around 6 while compositions C1.2 and C1.4 had an MVR of around 10-12. Example compositions Ex1.1-Ex1.4 correspond to C1.1-C1.4 but added 30 wt% of a polycarbonate-siloxane copolymer having a 6 wt% siloxane content and 15 wt% of a polycarbonate-siloxane copolymer having a 40 wt% siloxane content. The MVR of the example compositions increased from 3.9 to 10.4 cm³/10 min as the amount of the lower Mw/high flow PC (PC-2) was increased. The PC-Si copolymers have a molecular weight higher than that of PC-2, so example composition Ex1.1 (which did not include the lower Mw/high flow PC-2) had the lowest MVR of the four example compositions. Each of example compositions Ex1.1-Ex1.4 included the diffuser package with two types of diffuser beads. All compositions included TBPP as an antioxidant stabilizer.

The chemical resistance of the compositions was evaluated according to ESCR (Environmental Stress Cracking Resistance) method ISO 22088-3. The ESCR testing is performed by inserting ISO tensile bars in a constant strain ISO jig while chemicals are applied to the middle part of the tensile bars. The jig with chemically exposed tensile bars will be covered with an aluminum foil and will be sealed by folding the aluminum foil to avoid evaporation of the added chemicals during the test's exposure time. Tensile strength at yield (in megapascals, MPa) and tensile strain at break (in %) were evaluated in accordance with ISO 527 both before and after chemical exposure. Five (5) specimens were tested for each condition; results are averaged. The retention of the tensile strength at yield (σ_{y}) and tensile strain at break (ε_{b}) were calculated compared to a control sample (no chemical exposure). Based on this tensile retention data, the chemical resistance compatibility of the composition may be evaluated as "compatible," "marginal," or "not compatible" according to the criteria shown in Table 3:

**Table 3 - Chemical Resistance Compatibility Criteria Following ESCR Testing**

| **Compatibility Criteria** | **Yield Stress Retention,** σ_{y} **(%)** | **Tensile Strain at Break Retention,** (ε_{b}) **(*%*)** |
|---|---|---|
| Compatible | > 90 | 80-139 |
| Marginal | 80-89 | 65-79 |
| Not Compatible | < 79 | < 64 or > 140 |

Tensile and ESCR properties of comparative compositions C1.1-C1.4 are shown in Table 4:

**Table 4 - ESCR Properties of Compositions C1.1-C1.4**

| **Composition** | **C1.1** | **C1.2** | **C1.3** | **C1.4** |
|---|---|---|---|---|
| MVR (cm³/10 min) | 6.5 | 12.4 | 6.7 | 10.2 |
| | | | | |

| Unexposed | | | | |
|---|---|---|---|---|
| 3 days, 0.5 % strain | | | | |
| Stress at yield (MPa) | 59.8 | 59.4 | 60.3 | 62.3 |
| Strain at break (%) | 88.9 | 109.3 | 69.2 | 114 |
| Bars cracked | - | - | - | - |
| Stress Retention (%) | - | - | - | - |
| Strain Retention (%) | - | - | - | - |
| | | | | |

| **Exposed (Sonnenmilch)** | | | | |
|---|---|---|---|---|
| 3 Days, 0.5% Strain | | | | |
| Stress at yield (MPa) | 59.9 | 59.2 | 60.3 | 0 |
| Strain at break (%) | 92.4 | 59.8 | 14.3 | 1 |
| Bars cracked | - | | | 3 |
| Stress Retention (%) | 100% | 100% | 100% | 0% |
| Strain Retention (%) | 104% | *55%* | 21% | 1% |

The ESCR evaluation was performed by exposing the samples to sunscreen (Sonnenmilch MB-PM001 mixture). As shown in the table, the addition of diffuser beads to PC homopolymer (C1.3 and C1.4) having an MVR of about 6 and 10, respectively, is detrimental to ESCR performance. In particular, strain at break is significantly decreased when the diffuser beads were added and the composition is exposed to the chemical. Composition C1.4 (MVR 10.2) had complete failure in both yield stress and strain at break. This confirms that the diffuser beads are the cause for the failure of diffused PC products, particularly in high flow applications.

Tensile and ESCR properties for C1.3, C1.4 and Ex1.1-Ex1.4 were evaluated; results are shown in Table 5:

**Table 5 - ESCR Properties of Comparative and Example Compositions**

| **Composition** | **C1.3** | **C1.4** | **Ex1.1** | **Ex1.2** | **Ex1.3** | **Ex1.4** |
|---|---|---|---|---|---|---|
| MVR (cm³/10 min) | 6.7 | 10.2 | 3.9 | 4.7 | 5.4 | 10.4 |
| | | | | | | |

| **Unexposed** | | | | | | |
|---|---|---|---|---|---|---|
| 3 days, 0.5 % strain | | | | | | |
| Stress at yield (MPa) | 60.3 | 62.3 | 53.9 | 54.9 | 53.4 | 53.1 |
| Strain at break (%) | 69.2 | 114 | 93 | 91 | 99 | 108 |
| Bars cracked | - | - | - | - | - | - |
| Stress Retention (%) | - | - | - | - | - | - |
| Strain Retention (%) | - | - | - | - | - | - |
| | | | | | | |

| **Exposed (Sonnenmilch)** | | | | | | |
|---|---|---|---|---|---|---|
| 3 Days, 0.5% Strain | | | | | | |
| Stress at yield (MPa) | 60.3 | 0 | 54.1 | 55.1 | 53.7 | 52.3 |
| Strain at break (%) | 14.3 | 1 | 92 | 96 | 94 | 91 |
| Bars cracked | | 3 | - | - | - | - |
| Stress Retention (%) | 100% | 0% | 100% | 100% | 101% | 98% |
| Strain Retention (%) | 21% | 1% | 99% | 106% | 95% | 85% |
| | | | | | | |

| **Exposed (Sonnenmilch)** | | | | | | |
|---|---|---|---|---|---|---|
| 6 Days, 0.5% Strain | | | | | | |
| Stress at yield (MPa) | 61 | 0 | 53.5 | 56 | 55 | 43 |
| Strain at break (%) | 19.8 | 0 | 91.2 | 86.7 | 97.6 | 58.4 |
| Bars cracked | | - | - | - | - | 2 |
| Stress Retention (%) | 101% | 0% | 99% | 103% | 103% | 81% |
| Strain Retention (%) | 29% | 0% | 98% | 96% | 99% | 54% |
| | | | | | | |

| **Exposed (AF-3)** | | | | | | |
|---|---|---|---|---|---|---|
| 7 Days, 1*%* Strain | | | | | | |
| Stress at yield (MPa) | 0* | 0* | 53.4 | 44 | 43 | 52 |
| Strain at break (%) | 0* | 0* | 76.3 | 69 | 59 | 81 |
| Bars cracked | 5 | 5 | - | 1 | - | 1 |
| Stress Retention (%) | 0% | 0% | 99% | 80% | 80% | 98% |
| Strain Retention (%) | 0% | 0% | 82% | 76% | 60% | 74% |
| | | | | | | |

| **Exposed (Olive Oil)** | | | | | | |
|---|---|---|---|---|---|---|
| 3 Days, 1*%* Strain | | | | | | |
| Stress at yield (MPa) | 61.3 | 62 | 53 | 54 | 53 | 42 |
| Strain at break (%) | 82.4 | 48 | 90 | 93 | 99 | 78 |
| Bars cracked | - | - | - | - | - | 1 |
| Stress Retention (%) | 102% | 99% | 99% | 99% | 99% | 78% |
| Strain Retention (%) | 119% | 42% | 96% | 103% | 100% | 71% |

| | | | | | | |
|---|---|---|---|---|---|---|
| * All bars cracked within test jig after exposure | | | | | | |

The samples were exposed to sunscreen (Sonnenmilch MB-PM001 mixture for 3 and 6 days), AF-3 germicide (found in disinfectant wipes), and olive oil. The sunscreen simulates conditions found in automotive applications; AF-3 simulates conditions found in the medical applications, and olive oil simulates conditions found in industrial applications.

From the results, it is seen that addition of polycarbonate-siloxane copolymer, and in particular a PC-Si copolymer having a siloxane content of 40 wt%, significantly improves ESCR performance for the various chemical agents. Compositions Ex1.1, Ex1.2 and Ex1.3 show almost complete stress and strain retention for all the chemical agents and exposure time. Example composition Ex1.4, which included the lower Mw/higher flow PC homopolymer and an MVR of about 10 had slightly decreased ESCR performance, with a slight reduction in observed stress and strain retention. However, for most chemical agents the ESCR performance of this composition would be considered "compatible" according to the chemical resistance criteria recited in Table 3. And the ESCR performance of example composition Ex1.4 is still significantly better as compared to comparative composition C1.4, which had about the same MVR but showed complete failure for most chemical agents tested.

Further comparative compositions were prepared as shown in Table 6; example composition Ex1.1 is included for comparison:

**Table 6 - Comparative Compositions**

| | **Ex1.1** | **C1.5** | **C1.6** | **C1.7** |
|---|---|---|---|---|
| **Component** | | | | |
| PC-1 | 54.12 | 57.12 | 60.12 | 63.12 |
| PC-Si-1 | 30 | 30 | 30 | 30 |
| PC-Si-2 | 15 | 12 | 9 | 6 |
| TBPP | 0.08 | 0.08 | 0.08 | 0.08 |
| DB-1 | 0.7 | 0.7 | 0.7 | 0.7 |
| DB-2 | 0.1 | 0.1 | 0.1 | 0.1 |
| **Total (wt%)** | 100 | 100 | 100 | 100 |
| | | | | |

| **Exposed (AF-3)** 7 Days, 1*%* Strain | | | | |
|---|---|---|---|---|
| Stress Retention (%) | 99% | 40% | 40% | 40% |
| Strain Retention (%) | 82% | 38% | 36% | 25% |

The compositions were exposed to AF-3 germicide for 7 days at 1% strain. The content of PC-Si copolymer (40 wt% siloxane) was varied from Ex1.1 (15 wt%), C1.5 (12 wt%), C1.6 (9 wt%) and C1.7 (6 wt%). The content of PC-1 (high Mw/low flow PC homopolymer) was adjusted accordingly. These results show that the PC-Si copolymer (40 wt% siloxane) loading should be greater than 12 wt% to substantially retain mechanical properties after exposure, although it is noted that adding less than 12 wt% of this PC-Si copolymer still provides an improvement in chemical resistance as compared to compositions including only PC homopolymer. Compare C1.5-C1.7 to C1.3 and C1.4, which show complete failure with all tensile bars breaking after exposure to the AF-3 chemical.

The PC-Si copolymers used in the example compositions have a higher Mw/lower flow than the PC homopolymers used in comparative compositions C1.1-C1.4. As a result the MVR of these compositions is lower than that of their respective comparative compositions. However, the polycarbonate-siloxane copolymer, and in particular the PC-Si copolymer having a 40 wt% siloxane content, exhibits shear thinning behavior. This means that the PC-Si copolymer will have improved flow length upon the application of shear during molding as compared to conventional polycarbonate. FIG. 1 demonstrates this shear thinning effect; it shows the melt viscosity of the PC and PC-Si copolymer blends as a function of shear rate, where melt viscosity is evaluated in accordance with ISO 11443. From the graphs it is seen that although the MVR of the PC-Si copolymer compositions is lower compared to the compositions including PC homopolymer, the melt viscosity under shear is actually significantly lower (compare, e.g., C1.3 to Ex1.3 and C1.4 to Ex1.4). This provides improved path flow lengths for the PC-Si copolymer compositions as compared to the comparative PC homopolymer compositions having a similar MVR. Accordingly, given the unique properties of the PC-Si copolymer it is possible to obtain a high chemical resistance-as demonstrated in the data herein-combined with improved flow lengths and reduced apparent viscosity during injection molding for these blends.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a) from about 40 wt% to about 85 wt% of a polycarbonate homopolymer;
b) from greater than 12 wt% to about 30 wt% of a first polycarbonate-siloxane copolymer (PC-Si copolymer) having a siloxane content of from about 35 wt% to about 45 wt%;
c) from about 1 wt% to about 40 wt% of a second PC-Si copolymer having a siloxane content of from about 4 wt% to about 8 wt%; and
d) from about 0.01 wt% to about 2 wt% of at least one type of diffuser beads, wherein the combined weight percent value of all components does not exceed 100 wt%, and all weight percent values are based on the total weight of the composition.

2. The thermoplastic composition according to claim 1, wherein the polycarbonate homopolymer comprises a linear polycarbonate, a branched polycarbonate, a post-consumer recycled polycarbonate, a low molecular weight polycarbonate having a molecular weight of less than 28,000, a high molecular weight polycarbonate having a molecular weight of greater than 28,000, or a combination thereof, and wherein molecular weight is evaluated according to bisphenol A polycarbonate standards.

3. The thermoplastic composition according to claim 1 or 2, wherein the polycarbonate homopolymer comprises a first polycarbonate having a molecular weight of less than 28,000 and a second polycarbonate having a molecular weight of greater than 28,000, wherein molecular weight is evaluated according to bisphenol A polycarbonate standards.

4. The thermoplastic composition according to claim 3, wherein the first polycarbonate has a molecular weight of from 21,000 to 22,000 and the second polycarbonate has a molecular weight of from 30,000 to 31,000.

5. The thermoplastic composition according to any one of claims 1 to 4, wherein the first PC-Si copolymer has a siloxane content of about 40 wt%.

6. The thermoplastic composition according to any one of claims 1 to 5, wherein the second PC-Si copolymer has a siloxane content of about 6 wt%.

7. The thermoplastic composition according to any one of claims 1 to 6, wherein the composition comprises from about 15 wt% to about 30 wt% of the first PC-Si copolymer.

8. The thermoplastic composition according to any one of claims 1 to 7, wherein the at least one type of diffuser beads comprises poly methyl methacrylate (PMMA) crosslinked diffuser beads, silicone diffuser beads, or a combination thereof.

9. The thermoplastic composition according to any one of claims 1 to 8, wherein the composition comprises at least two types of diffuser beads.

10. The thermoplastic composition according to any one of claims 1 to 9, wherein the composition comprises at least one additional additive.

11. The thermoplastic composition according to claim 10, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV stabilizer, an impact modifier, a blowing agent, a reinforcing agent, or a combination thereof.

12. The thermoplastic composition according to any one of claims 1 to 11, wherein the composition has a melt volume rate (MVR) of at least 3.5 cubic centimeters per 10 minutes (cm³/10 min) as evaluated in accordance with ISO 1133 at 300 °C and with a 1.2 kilogram (kg) force.

13. The thermoplastic composition according to any one of claims 1 to 12, wherein after Environmental Stress Cracking Resistance (ESCR) testing according to ISO 22088-3 the composition has a tensile stress at yield retention of at least 80% or a tensile strain at break retention of at least 70%, wherein tensile stress at yield and tensile strain at break are evaluated in accordance with ISO 527.

14. The thermoplastic composition according to any one of claims 1 to 13, wherein the composition has a lower apparent viscosity at a shear rate of 1000 inverse seconds (1/s) as compared to a comparative composition having the same melt volume rate but that does not comprise a PC-Si copolymer having a siloxane content of from about 35 wt% to 45 wt%, wherein apparent viscosity is evaluated according to ISO 11443.

15. An article comprising the thermoplastic composition according to any one of claims 1 to 14, wherein the article is a functional lighting, medical equipment, or automotive industries component.
